# EUROPÄISCHE PATENTSCHRIFT

(11) **EP 2 918 662 B1**
(45) Veröffentlichungstag und Bekanntmachung des Hinweises auf die Patenterteilung: **09.08.2017**
(21) Anmeldenummer: 15158669.0
(22) Anmeldetag: 11.03.2015
(51) Int. Cl.: C10L 9/08, G05B 15/02, C10L 3/10, B01J 19/24

(54) **VERFAHREN ZUR DURCHFÜHRUNG EINER HYDROTHERMALEN KARBONISIERUNGSREAKTION UND VERWENDUNG EINES SENSORS ODER ANALYSEGERÄTS HIERFÜR**
METHOD FOR PERFORMING A HYDROTHERMAL CARBONISATION REACTION AND THE USE OF A SENSOR OR ANALYZER FOR SAME
PROCÉDÉ D'EXÉCUTION D'UNE RÉACTION DE CARBONISATION HYDROTHERMALE ET UTILISATION D'UN CAPTEUR OU D'UN APPAREIL D'ANALYSE CORRESPONDANTS

(30) Priorität: 12.03.2014 DE 102014103346
(43) Veröffentlichungstag der Anmeldung: 16.09.2015
(73) Patentinhaber: AVA-CO2 Schweiz AG, 6304 Zug (CH); Karlsruher Institut für Technologie, 76131 Karlsruhe (DE)
(72) Erfinder: Vyskocil, Jan, 6045 Meggen (CH)
(74) Vertreter: Geitz Truckenmüller Lucht Christ

(56) Entgegenhaltungen:
- EP-A1- 2 206 688
- EP-A2- 2 130 893
- DE-B3-102007 012 112

## Beschreibung

Die vorliegende Erfindung betrifft ein Verfahren zum Betrieb eines Reaktors im Rahmen der hydrothermalen Karbonisierung und die Verwendung eines Sensors oder eines Analysegeräts für den gesamten organischen Kohlenstoff, für den gelösten organischen Kohlenstoff oder für Fraktionen des gesamten organischen Kohlenstoffs.

Ein solches Verfahren und eine Verwendung eines Sensors sind aus der EP 2 206 688 A1 vorbekannt. Dort wird nach Abschluss eines hydrothermalen Karbonisierungsprozesses über eine Bypassleitung das Produkt von Prozesswasser getrennt und das Prozesswasser über eine Pumpe in den Reaktor zurückgeführt. Mithilfe des Sensors wird das Produkt nach dem Reaktionsprozess untersucht.

Im Rahmen der hydrothermalen Karbonisierungsreaktion werden unter erhöhtem Druck und erhöhter Temperatur aus Biomasse Kohlenstoff und andere Beiprodukte gewonnen. Hierbei kann insbesondere bei der richtigen Anwendung von Druck und Temperatur zu bestimmten Zeitpunkten und damit bei einer korrekten Befolgung entsprechend ausgearbeiteter Programme eine sehr hohe Effizienz erreicht werden, so dass unter sehr geringem Energieeinsatz die Biomasse in verwertbare kohlenstoffhaltige Stoffe oder Kohlenstoff selbst umgewandelt werden kann.

Hierbei steigt die Effizienz deutlich durch eine geeignete Anpassung des Verfahrens an die gewählte Biomasse. Sowohl die genannten Parameter als auch weitere Parameter wie beispielsweise Art und Zeitpunkt der Dampfzufuhr sowie die Menge des zugeführten Dampfes spielen hierfür eine prominente Rolle, als auch die Zusammensetzung der zugeführten Biomasse. Prinzipiell müsste also eine Anpassung des hydrothermalen Karbonisierungsvorganges an die jeweils gewählte Biomasse stattfinden, um die jeweils gewählte Biomasse möglichst effizient zu verarbeiten. Im groben Rahmen ist dies auch durch die Wahl geeigneter Einstellungen ohne Weiteres von Hand möglich, wenn beispielsweise flüssige, kohlenstoffhaltige Mischungen wiederum von Gartenabfällen unterschieden werden müssen. Allerdings unterscheiden sich auch Gartenabfälle von anderen Gartenabfällen, so dass hier eine feinere Unterscheidung erforderlich sein wird, um die Effizienz weiter zu steigern.

Nachdem es angesichts des geschlossenen Zustandes eines Reaktionsbehälters im hydrothermalen Karbonisierungsverfahren unmöglich ist, von außen her in sinnvoller Weise nach Gutdünken einzugreifen, wird im Rahmen der Erfindung nach anderen Möglichkeiten gesucht, auf den hydrothermalen Karbonisierungsprozess einzuwirken um die Effizienz des Prozesses zu verbessern.

Vor diesem Hintergrund liegt der vorliegenden Erfindung die Aufgabe zu Grunde, aus dem laufenden Karbonisierungsprozess heraus Daten zu gewinnen, anhand derer Parameter eines hydrothermalen Karbonisierungsprozesses von außen beeinflusst werden können, um die Effizienz des Prozesses zu verbessern.

Gelöst wird dies durch ein Verfahren zum Betrieb eines Reaktors im Rahmen der hydrothermalen Karbonisierung gemäß den Merkmalen des Anspruchs 1. Ferner wird diese Aufgabe gelöst durch Verwendung eines Sensors oder eines Analysegeräts für den gesamten organischen Kohlenstoff, für den gelösten organischen Kohlenstoff oder für Fraktionen des gesamten organischen Kohlenstoffs gemäß den Merkmalen des nebengeordneten Anspruchs 5. Weitere Ausgestaltungen des Verfahrens können den Unteransprüchen entnommen werden.

Erfindungsgemäß ist vorgesehen, dass einem Reaktionsbehälter, in dem die hydrothermalen Karbonisierungsreaktion in einem Batch-Verfahren abläuft, eine Bypassleitung zuzuordnen, in welche das mit der Biomasse versetzte Prozesswasser einlaufen kann. Dieser Bypassleitung ist dann ein Sensor oder auch ein Analysegerät zugeordnet, mit welchem sich Werte für den gesamten organischen Kohlenstoff (TOC, Total Organic Carbon), für den gelösten organischen Kohlenstoff (DOC, Dissolved Organic Carbon) oder für Fraktionen des gesamten organischen Kohlenstoffs ermitteln lassen. Mit einem so genannten TOC- bzw. DOC-Sensor oder einem TOC- bzw. DOC-Analysegerät kann eine Aufstellung generiert werden, welche Kohlenstoffverbindungen inklusive reinem Kohlenstoff in welcher Konzentration in dem Prozesswasser vorliegen. Hieraus lässt sich der Grad des Fortschritts der hydrothermalen Karbonisierungsreaktion zu einem bestimmten Zeitpunkt ableiten, so dass hieraus eine fundierte Einschätzung des aktuellen Zustands innerhalb des Reaktors ermöglicht wird.

Neben der reinen Informationsgewinnung durch den Sensor bzw. das Analysegerät können diese auch so eingerichtet werden, dass ein Meldesignal bei Überschreiten oder auch bei Ausbleiben einer Überschreitung eines Grenzwertes verschiedener überwachter Kohlenstoffverbindungen ausgegeben wird, auf welches das Bedienpersonal reagieren kann. Alternativ übergibt ein Sensor oder Analysegerät ein derartiges Meldesignal direkt an eine Prozesssteuerung, welche das Signal ihrerseits entweder direkt ausgibt, an einen Leitstand weitergibt oder selbst in den Prozess eingreift. Im letzteren Falle sind der Prozesssteuerung einerseits Mittel zur Beeinflussung des hydrothermalen Karbonisierungsprozesses zugeordnet, mit welchen Parameter wie die Zufuhr von Biomasse, die Zufuhr von Dampf sowie die Beeinflussung von Druck und Temperatur und weitere Parameter beeinflussbar sind. Die Prozesssteuerung wird zu ihrer Orientierung auf Datenbankeinträge einer Referenzdatenbank zugreifen und die Messwerte des Sensors oder der Sensoren bzw. des Analysegeräts oder der Analysegeräte mit diesen Datenbankeinträgen vergleichen. Den Datenbankeinträgen sind hierbei Regelwerke zur Ansteuerung der Mittel zur Beeinflussung des hydrothermalen Karbonisierungsprozesses zugeordnet, so dass die Prozesssteuerung dem entnehmen kann, welche Maßnahmen zu ergreifen sind. Sofern keine exakte Übereinstimmung der Messwerte mit den vorgegebenen Datenbankeinträgen aufzufinden ist, wird die Prozesssteuerung den nächstliegenden Wert nach ebenfalls vorgegebenen Kriterien auswählen.

Die vorstehend beschriebene Erfindung wird im Folgenden anhand eines Ausführungsbeispiels mit einem TOC-Sensor näher erläutert.

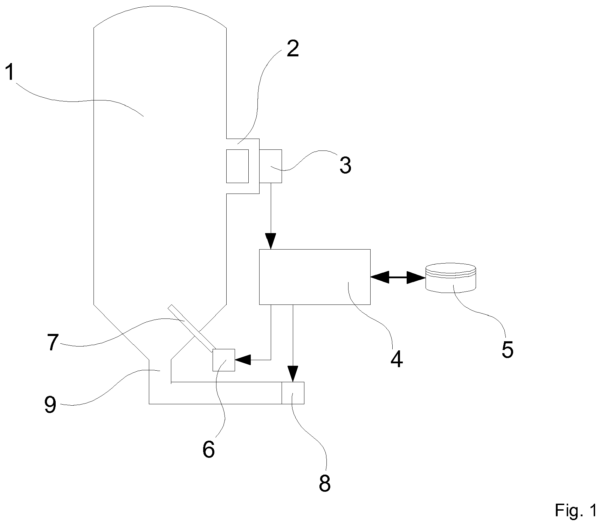

Figur 1 zeigt einen Reaktionsbehälter 1, welchem eine Dampfzuführung 7 sowie eine Slurryzuführung 9 zugeordnet sind. Im Inneren des Reaktionsbehälters 1 läuft nach Zufuhr von Dampf und Slurry die hydrothermale Karbonisierungsreaktion ab. Dem Reaktionsbehälter 1 ist ferner eine Bypassleitung 2 zugeordnet, welche im Laufe der hydrothermalen Karbonisierungsreaktion mit Prozesswasser gefüllt wird, welches durch die Bypassleitung 2 hindurchströmt. Bedarfsweise können der Bypassleitung hierfür auch eine Pumpe oder ein anderer Strömungsantrieb zugeordnet sein, welche für eine Förderung des mit Slurry versetzten Prozesswassers durch die Bypassleitung vorgesehen ist. Der Bypassleitung 2 zugeordnet ist ferner ein Sensor 3 für den gesamten organischen Kohlenstoff (TOC-Sensor), welcher in der Lage ist, reinen Kohlenstoff sowie mehrere Kohlenstoffverbindungen innerhalb des Prozesswassers in der Bypassleitung 2 zu identifizieren und zu quantifizieren. Auf diese Art und Weise kann festgestellt werden, wie weit fortgeschritten die Karbonisierungsreaktion im Reaktionsbehälter 1 zu einem bestimmten Zeitpunkt bereits ist. Hieraus können Rückschlüsse gezogen werden, ob gegebenenfalls eine Anpassung der Reaktionsbedingungen erforderlich ist. Der Sensor für den gesamten organischen Kohlenstoff 3 leitet seine Messdaten an eine Prozesssteuerung 4 weiter, welche ihrerseits mit einer Referenzdatenbank 5 verbunden ist. Die Referenzdatenbank 5 umfasst eine Vielzahl von Datenbankeinträgen, welche aufgrund der von dem Sensor 3 für den gesamten organischen Kohlenstoff gelieferten Messdaten ausgewählt und der Prozesssteuerung 4 zur Verfügung gestellt werden. Jeder Datenbankeintrag weist abhängig von dem ihn aufrufenden Messwert ein Regelwerk auf, nach dem auf den hydrothermalen Karbonisierungsprozess eingewirkt werden soll. Der Prozesssteuerung 4 sind hierfür Mittel zur Steuerung der Dampfzufuhr 6 sowie Mittel zur Steuerung der Slurryzufuhr 8 beigegeben. Erreicht die Prozesssteuerung 4 also ein Messdatum des Sensors 3 für den gesamten organischen Kohlenstoff, so wird die Prozesssteuerung 4 unter Berücksichtigung des Zeitpunkts der Messdatenerhebung im Verhältnis zum Start der Karbonisierungsreaktion oder einem anderen Referenzzeitpunkt einen mit dem Messdatum korrespondierenden Datenbankeintrag aus der Referenzdatenbank 5 abrufen und gemäß dem in diesem Datenbankeintrag abgelegten Regelwerk die Mittel zur Steuerung der Dampfzufuhr 6 sowie die Mittel zur Steuerung der Slurryzufuhr 8, sowie bedarfsweise weitere, hier nicht näher bezeichnete Steuerungskomponenten steuern. Auf diese Art und Weise kann je nach Verlauf der hydrothermalen Karbonisierungsreaktion innerhalb des Reaktionsbehälters 1 durch die Prozesssteuerung 4 der Prozess so angepasst werden, dass er möglichst effizient abläuft.

Vorstehend beschrieben sind somit Verfahren und Vorrichtung zum Betrieb eines Reaktors im Rahmen der hydrothermalen Karbonisierung sowie eine Verwendung eines Sensors oder eines Analysegeräts für den gesamten organischen Kohlenstoff, für den gelösten organischen Kohlenstoff oder für Fraktionen des gesamten organischen Kohlenstoffs in einer Bypassleitung des Reaktionsbehälters, mit dem Ziel einer geeigneten Informationsgewinnung zur Beeinflussung des laufenden hydrothermalen Karbonisierungsprozesses im Hinblick auf eine mögliche Effizienzsteigerung.

## Patentansprüche

1. Verfahren zum Betrieb eines Reaktors im Rahmen der hydrothermalen Karbonisierung, bei dem die hydrothermale Karbonisierungsreaktion in einem Reaktionsbehälter (1) mit einer Bypassleitung (2) abläuft, wobei mithilfe eines Sensors (3) oder eines Analysegeräts eine Ermittlung eines Konzentrationswertes für den gesamten organischen Kohlenstoff oder Fraktionen davon in dem im Reaktionsbehälter (1) enthaltenen Prozesswasser durchgeführt wird
**dadurch gekennzeichnet, dass** der Sensor (3) oder das Analysegerät in der Bypassleitung angeordnet ist, die Messwerte des Sensors (3) oder Analysegeräts mit vorgegebenen Grenzwerten verglichen und abhängig von einem Überschreiten oder Unterschreiten einzelner Messwerte ein Meldesignal an eine Prozesssteuerung (4) ausgegeben wird und die Prozesssteuerung (4) Mittel zur Beeinflussung der hydrothermalen Karbonisierungsreaktion steuert, wobei die Prozesssteuerung im Falle eines eintreffenden Meldesignals dieses mit Datenbankeinträgen einer Referenzdatenbank (5) vergleicht und ein in einem korrespondierenden Datenbankeintrag hinterlegtes Regelwerk zur Ansteuerung der Mittel zur Beeinflussung des hydrothermalen Karbonisierungsreaktion umsetzt.

2. Verfahren gemäß Anspruch 1, **dadurch gekennzeichnet, dass** mithilfe des Sensors (3) oder Analysegeräts ein Konzentrationswert für den Kohlenstoffgehalt ermittelt wird.

3. Verfahren gemäß einem der Ansprüche 1 oder 2, **dadurch gekennzeichnet, dass** mithilfe des Sensors (3) oder Analysegeräts Konzentrationswerte für einen oder mehrere Kohlenstoffverbindungen ermittelt werden.

4. Verfahren gemäß einem der vorhergehenden Ansprüche, **dadurch gekennzeichnet, dass** die Prozesssteuerung (4) das Meldesignal über Ausgabemittel ausgibt.

5. Verwendung eines Sensors oder eines Analysegeräts für den gesamten organischen Kohlenstoff, für den gelösten organischen Kohlenstoff oder für Fraktionen des gesamten organischen Kohlenstoffs in einer Bypassleitung (2) eines Reaktionsbehälters (1) für eine hydrothermale Karbonisierungsreaktion zur Gewinnung von Messdaten für eine Prozesssteuerung (4) zur Steuerung von Mitteln zur Beeinflussung der hydrothermalen Karbonisierungsreaktion,
**dadurch gekennzeichnet, dass** der Sensor (3) oder das Analysegerät in der Bypassleitung angeordnet ist, die Messwerte des Sensors (3) oder Analysegeräts mit vorgegebenen Grenzwerten verglichen und abhängig von einem Überschreiten oder Unterschreiten einzelner Messwerte ein Meldesignal an eine Prozesssteuerung (4) ausgegeben wird und die Prozesssteuerung (4) Mittel zur Beeinflussung der hydrothermalen Karbonisierungsreaktion steuert, wobei die Prozesssteuerung im Falle eines eintreffenden Meldesignals dieses mit Datenbankeinträgen einer Referenzdatenbank (5) vergleicht und ein in einem korrespondierenden Datenbankeintrag hinterlegtes Regelwerk zur Ansteuerung der Mittel zur Beeinflussung des hydrothermalen Karbonisierungsreaktion umsetzt.

## Claims

1. A method for operating a reactor within the scope of hydrothermal carbonisation, wherein the hydrothermal carbonisation reaction is conducted in a reaction vessel (1) having a bypass line (2), wherein a determination of a concentration value for the total organic carbon or fractions thereof in process water contained in the reaction vessel is carried out by means of a sensor (3) or an analysis device, **characterized in that** the sensor (3) or the analysis device is arranged in the bypass line, the measured values of the sensor (3) or the analysis device are compared with predetermined limit values, and a reporting signal is emitted to a process controller (4) depending on the measured values exceeding or falling below individual limit values, and the process controller (4) controls means for influencing the hydrothermal carbonisation reaction, wherein the process controller, in the event of an incoming reporting signal, compares it with database entries of a reference database (5) and implements a set of rules stored in a corresponding database entry for triggering the means for influencing the hydrothermal carbonisation reaction.

2. A method according to claim 1, **characterized in that** a concentration value for the carbon content is determined by means of the sensor (3) or the analysis device.

3. A method according to one of the claims 1 or 2, **characterized in that** concentration values for one or several carbon compounds are determined by means of the sensor (3) or analysis device.

4. A method according to one of the preceding claims, **characterized in that** the process controller (4) emits the reporting signal via output means.

5. Use of a sensor or an analysis device for the entire organic carbon, for the dissolved organic carbon or for fractions of the entire organic carbon in a bypass line (2) of a reaction vessel (1) for a hydrothermal carbonisation reaction for obtaining measured data for a process controller (4) for controlling means for influencing the hydrothermal carbonisation reaction, **characterized in that** the sensor (3) or the analysis device is arranged in the bypass line, the measured values of the sensor (3) or the analysis device are compared with predetermined limit values, and a reporting signal is emitted to a process controller (4) depending on the measured values exceeding or falling below individual limit values, and the process controller (4) controls means for influencing the hydrothermal carbonisation reaction, wherein the process controller, in the event of an incoming reporting signal, compares it with database entries of a reference database (5) and implements a set of rules stored in a corresponding database entry for triggering the means for influencing the hydrothermal carbonisation reaction.

## Revendications

1. Procédé d'exploitation d'un réacteur dans le cadre d'une carbonisation hydrothermale, dans lequel la réaction de carbonisation hydrothermale se déroule dans une cuve de réaction (1) avec une conduite de dérivation (2), une concentration du carbone organique total ou de fractions de celui-ci dans l'eau de process contenue dans la cuve de réaction (1) étant déterminée au moyen d'un capteur (3) ou d'un analyseur, **caractérisé en ce que** le capteur (3) ou l'analyseur est disposé dans la conduite de dérivation, les valeurs mesurées par le capteur (3) ou l'analyseur sont comparées à des limites prédéterminées et, selon si certaines valeurs de mesure sont en dessous ou au-dessus des limites, un signal est transmis à une commande de process (4) et la commande de process (4) commande des moyens pour influencer la réaction de carbonisation hydrothermale, la commande de process comparant, si elle reçoit un signal, ce signal à des entrées dans une banque de données de référence (5) et appliquant un recueil de règles stocké dans une banque de données correspondantes afin d'activer les moyens pour influencer la réaction de carbonisation hydrothermale.

2. Procédé selon la revendication 1, **caractérisé en ce qu'**une valeur de concentration de la teneur en carbone est déterminée à l'aide du capteur (3) ou de l'analyseur.

3. Procédé selon l'une des revendications 1 ou 2, **caractérisé en ce que** des valeurs de concentration d'un ou plusieurs composés de carbone sont déterminées à l'aide du capteur (3) ou de l'analyseur.

4. Procédé selon l'une des revendications précédentes, **caractérisé en ce que** la commande de process (4) émet le signal à l'aide de moyens de sortie.

5. Utilisation d'un capteur ou d'un analyseur pour le carbone organique total, le carbone organique dissous ou des fractions du carbone organique total dans une conduite de dérivation (2) d'une cuve de réaction (1) servant à une réaction de carbonisation hydrothermale en vue de l'obtention de données de mesure pour une commande de process (4) pour la commande de moyens influençant la réaction de carbonisation hydrothermale, **caractérisée en ce que** le capteur (3) ou l'analyseur est disposé dans la conduite de dérivation, les valeurs mesurées par le capteur (3) ou l'analyseur sont comparées à des limites prédéterminées et, selon si certaines valeurs de mesure sont en dessous ou au-dessus des limites, un signal est transmis à une commande de process (4) et la commande de process (4) commande des moyens pour influencer la réaction de carbonisation hydrothermale, la commande de process comparant, si elle reçoit un signal, ce signal à des entrées dans une banque de données de référence (5) et appliquant un recueil de règles stocké dans une banque de données correspondantes afin d'activer les moyens pour influencer la réaction de carbonisation hydrothermale.
